Europäisches Patentamt

European Patent Office

Office européen des brevets

(19)

(11) EP 1 241 843 A2

## (12) EUROPEAN PATENT APPLICATION

(43) Date of publication:
**18.09.2002 Bulletin 2002/38**

(51) Int Cl.⁷: **H04L 12/56**, H04Q 11/04

(21) Application number: **02400010.1**

(22) Date of filing: **21.02.2002**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **22.02.2001 US 791083**

(71) Applicant: **Alcatel Internetworking (PE), Inc.
Spokane, Washington 99206 (US)**

(72) Inventors:
• **Paul, Dennis
  Liberty Lake, Washington 99019 (US)**
• **Wheeler, Jerrold
  Spokane, Washington 99223 (US)**

(74) Representative: **Schäfer, Wolfgang
  Dreiss Fuhlendorf, Steimle & Becker,
  Gerokstrasse 1,
  Postfach 10 37 62
  70032 Stuttgart (DE)**

### (54) Multi-contract rate policing

(57) Soft bandwidth policing where a packet does not necessarily receive the least favorable treatment indicated by the applicable bandwidth contracts. Multiple bandwidth contracts are created for a customer and different priorities are assigned to each bandwidth contract. When an inbound packet is received, a policing engine selects the highest priority bandwidth contract and applies its policing data to determine if the inbound packet complies with it. If the inbound packet is in compliance with the selected bandwidth contract, the packet is admitted. If the inbound packet is not in compliance with the selected bandwidth contract and the bandwidth contract is the lowest priority bandwidth contract, the inbound packet is discarded. Otherwise, if the selected bandwidth contract is not the lowest priority bandwidth contract, the next highest priority bandwidth contract is examined to determine whether the packet may be admitted under it.

FIG. 1

## Description

The present application contains subject matter related to the subject matter disclosed in U.S. Patent Application Ser. No. 09/757,361 entitled "Packet Processor with Multi-Level Policing Logic" (Attorney Docket No. 40032/JEJ/X2/134026) filed January 8, 2001, and U.S. Patent Application Ser. No. 09/751,194 (Attorney Docket No. 40029/JEJ/X2/134021) entitled "Programmable Packet Processor with Flow Resolution Logic" filed December 28, 2000,the contents of both of which are incorporated herein by reference.

FIELD OF THE INVENTION

This invention relates generally to data communication switches, and more particularly to bandwidth rate policing by the data communication switches based on multiple bandwidth contracts.

BACKGROUND OF THE INVENTION

Rate policing is increasingly becoming important in data communication networks as customers entitled to different qualities of service (QoS) compete for the available bandwidth of a common set of network resources. Rate policing is typically accomplished at each switch by classifying each packet into a policing group and comparing the classified packet against one or more bandwidth contracts defined for the group. Based on the identified bandwidth contract, the packet may be forwarded, forwarded with a discard eligible marking, or discarded.

Rate policing has generally been implemented as a "hard" feature in the sense that a packet receives the least favorable treatment indicated by any of the applicable bandwidth contract comparisons. However, it may be desirable, in certain situations, to implement rate policing as a "softer" feature in which a packet does not necessarily receive the least favorable treatment indicated by the comparisons. As one example, it may be desirable to admit a packet in violation of its flow bandwidth contract if the packet arrived on an interface that is below its interface bandwidth contract.

SUMMARY OF THE INVENTION

The present invention is directed to a soft multi-contract rate policing where a packet does not necessarily receive the least favorable treatment indicated by any of the applicable bandwidth contracts. Instead, a packet may be admitted even if it violates a particular bandwidth contract as long as it complies with another bandwidth contract it has been classified to.

In one embodiment of the invention, different priorities are assigned to ones of bandwidth contracts. When an inbound packet is received, a first bandwidth contract having a first priority is selected, and a determination is made as to whether the packet is in compliance with the first bandwidth contract. If the packet is not in compliance with the first bandwidth contract, a second bandwidth contract having a second priority is selected and a determination is made as to whether the packet is in compliance with the second bandwidth contract. The packet is admitted if the packet is in compliance with the second bandwidth contract.

In one particular embodiment of the invention, the packet is admitted if the packet is in compliance with the first bandwidth contract.

In another particular embodiment of the invention, the packet is discarded if the packet is not in compliance with the second bandwidth contract.

In a further embodiment of the invention, each bandwidth contract is associated with policing data including information on bandwidth constraints, and the step of determining if the packet is in compliance with the first or second bandwidth contract further comprises retrieving the policing data associated with the first or second bandwidth contract and producing a policing result based on the policing data.

In yet another aspect of the invention, the ones of the bandwidth contracts are applicable to a switch, interface, port, or flow.

DESCRIPTION OF THE DRAWINGS

FIG. 1 illustrates a network environment including a packet switching node in which one embodiment of the present invention is used;

FIG. 2 is a block diagram of a switching interface in one embodiment of the present invention;

FIG. 3 is a block diagram of a programmable packet switching controller in one embodiment of the present invention;

FIG. 4 is a block diagram of a packet switching controller with programmable disposition logic in one embodiment of the present invention;

FIG. 5 is a flow diagram of a process of programmatically generating a disposition decision using multiple disposition recommendations and classification information in one embodiment of the present invention;

FIG. 6 is a block diagram illustrating the policing of different flows;

FIG. 7 is an illustration of exemplary policing data records used for policing data packets based on soft bandwidth policing according to one embodiment of the invention;

FIG. 8 is an illustration of an exemplary policing data table used for policing data packets based on soft bandwidth policing according to an alternative embodiment of the invention; and

FIG. 9 is an exemplary flow diagram of a soft bandwidth policing process.

DESCRIPTION OF THE INVENTION

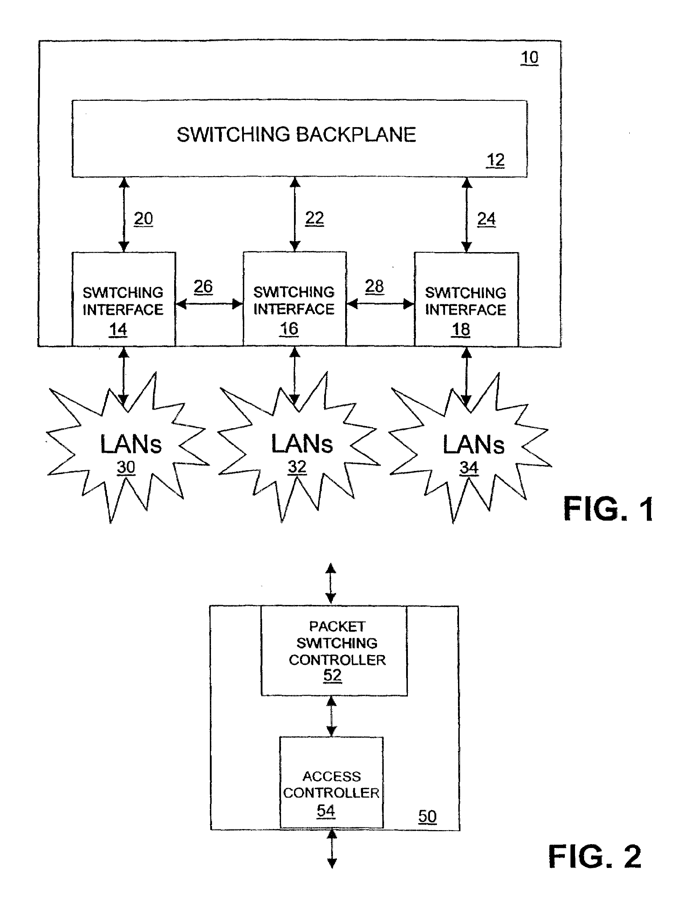

In FIG. 1, a network environment including a packet switching node 10 is illustrated. The packet switching node may also be referred to as a switch, a data communication node or a data communication switch. The packet switching node 10 includes switching interfaces 14, 16 and 18 interconnected to respective groups of LANs 30, 32, 34, and interconnected to one another over data paths 20, 22, 24 via a switching backplane 12. The switching backplane 12 preferably includes a switching fabric. The switching interfaces may also be coupled to one another over control paths 26 and 28.

The switching interfaces 14, 16, 18 preferably forward packets to and from their respective groups of LANs 30, 32, 34 in accordance with one or more operative communication protocols, such as, for example, media access control (MAC) bridging and Internet Protocol (IP) routing. The switching node 10 is shown for illustrative purposes only. In practice, packet switching nodes may include more or less than three switching interfaces.

FIG. 2 is a block diagram of a switching interface 50 in one embodiment of the present invention. The switching interface 50 may be similar, for example, to the switching interfaces 14, 16, 18 of FIG. 1. The switching interface 50 includes an access controller 54 coupled between LANs and a packet switching controller 52. The access controller 54, which may, for example, include a media access controller (MAC), preferably receives inbound packets off the LANs, performs flow-independent physical and MAC layer operations on the inbound packets, and transmits the inbound packets to the packet switching controller 52 for flow-dependent processing. The access controller 54 preferably also receives outbound packets from the packet switching controller 52 and transmits the packets on the LANs. The access controller 54 may also perform physical and MAC layer operations on the outbound packets prior to transmitting them on the LANs.

The packet switching controller 52 preferably receives inbound packets, classifies the packets, and transmits them on switching backplane, such as the switching backplane 12 of FIG. 1. The packet switching controller 52 preferably also receives packets from other packet switching controllers via the switching backplane 12 and transmits them to the access controller 54 for forwarding on the LANs. The packet switching controller 52 may also subject selected ones of the packets to egress processing prior to transmitting them to the access controller 54 for forwarding on LANs.

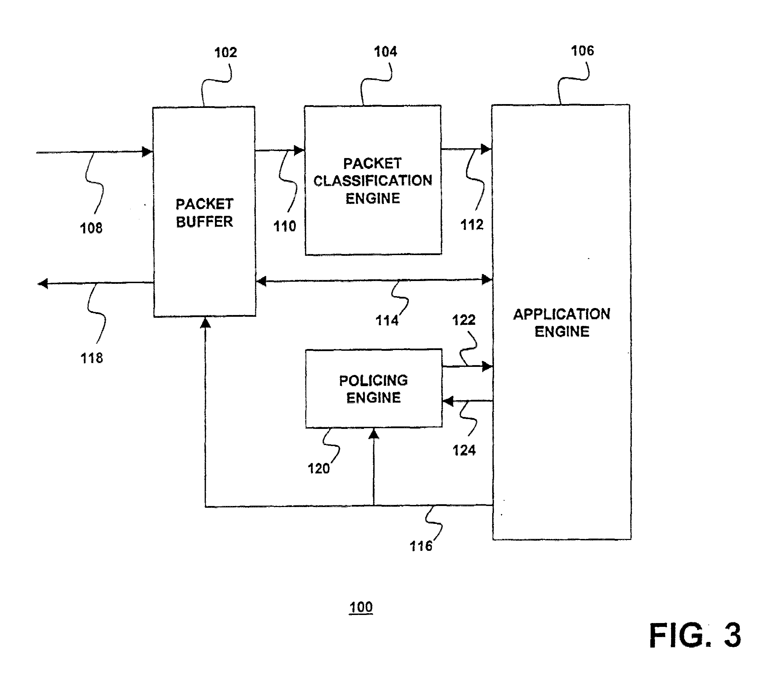

According to one embodiment of the invention, the packet switching controller 52 is a programmable packet switching controller. FIG. 3 is a block diagram of a programmable packet switching controller 100 in one embodiment of the present invention. The programmable packet switching controller 100, for example, may be similar to the packet switching controller 52 of FIG. 2. The programmable packet switching controller 100 preferably has flow resolution logic for classifying and routing incoming flows of packets. Due to its programmable nature, the programmable packet switching controller preferably provides flexibility in handling many different protocols and/or field upgradeability. The programmable packet switching controller may also be referred to as a packet switching controller, a switching controller, a programmable packet processor, a network processor, a communications processor or as another designation commonly used by those skilled in the art.

The programmable packet switching controller 100 preferably includes a packet buffer 102, a packet classification engine 104, an application engine 106, and a policing engine 120. The policing engine may also be referred to as a policing element. Packet switching controllers in other embodiments may include more or less components. For example, a packet switching controller in another embodiment may include a pattern match module for comparing packet portions against a predetermined pattern to look for a match. The packet switching controller in yet another embodiment may include an edit module for editing inbound packets to generate outbound packets.

The programmable packet switching controller 100 preferably receives inbound packets 108. The packets may include, but are not limited to, Ethernet frames, ATM cells, TCP/IP and/or UDP/IP packets, and may also include other Layer 2 (Data Link/MAC Layer), Layer 3 (Network Layer) or Layer 4 (Transport Layer) data units. For example, the packet buffer 102 may receive inbound packets from one or more Media Access Control (MAC) Layer interfaces over the Ethernet.

The received packets preferably are stored in the packet buffer 102. The packet buffer 102 may include a packet FIFO for receiving and temporarily storing the packets. The packet buffer 102 preferably provides the stored packets or portions thereof to the packet classification engine 104 and the application engine 106 for processing.

The packet buffer 102 may also include an edit module for editing the packets prior to forwarding them out of the switching controller as outbound packets 118. The edit module may include an edit program construction engine for creating edit programs real-time and/or an edit engine for modifying the packets. The application engine 106 preferably provides application data 116, which may include a disposition decision for the packet, to the packet buffer 102, and the edit program construction engine preferably uses the application data to create the edit programs. The outbound packets 118 may be transmitted over a switching fabric interface to communication networks, such as, for example, the Ethernet.

The packet buffer 102 may also include either or both a header data extractor and a header data cache. The header data extractor preferably is used to extract one or more fields from the packets, and to store the extracted fields in the header data cache as extracted header data. The extracted header data may include, but are not limited to, some or all of the packet header. In an Ethernet system, for example, the header data cache may also store first N bytes of each frame.

The extracted header data preferably is provided in an output signal 110 to the packet classification engine 104 for processing. The application engine may also request and receive the extracted header data over an interface 114. The extracted header data may include, but are not limited to, one or more of Layer 2 MAC addresses, 802.1P/ Q tag status, Layer 2 encapsulation type, Layer 3 protocol type, Layer 3 addresses, ToS (type of service) values and Layer 4 port numbers. In other embodiments, the output signal 110 may include the whole inbound packet, instead of or in addition to the extracted header data. In still other embodiments, the packet classification engine 104 may be used to edit the extracted header data to be placed in a format suitable for use by the application engine, and/or to load data into the header data cache.

The packet classification engine 104 preferably includes a programmable microcode-driven embedded processing engine. The packet classification engine 104 preferably is coupled to an instruction RAM (IRAM) (not shown). The packet classification engine preferably reads and executes instructions stored in the IRAM. In one embodiment, many of the instructions executed by the packet classification engine are conditional jumps. In this embodiment, the classification logic includes a decision tree with leaves at the end points that preferably indicate different types of packet classifications. Further, branches of the decision tree preferably are selected based on comparisons between the conditions of the instructions and the header fields stored in the header data cache. In other embodiments, the classification logic may not be based on a decision tree.

In one embodiment of the present invention, the application engine 106 preferably has a pipelined architecture wherein multiple programmable sub-engines are pipelined in series. Each programmable sub-engine preferably performs an action on the packet, and preferably forwards the packet to the next programmable sub-engine in a "bucket brigade" fashion. The packet classification engine preferably starts the pipelined packet processing by starting the first programmable sub-engine in the application engine using a start signal 112. The start signal 112 may include identification of one or more programs to be executed in the application engine 106. The start signal 112 may also include packet classification information. The programmable sub-engines in the application engine preferably have direct access to the header data and the extracted fields stored in the header data cache over the interface 114.

The application engine may include other processing stages not performed by the programmable sub-engines, however, the decision-making stages preferably are performed by the programmable sub-engines to increase flexibility. In other embodiments, the application engine may include other processing architectures.

The disposition decision included in the application data 116 preferably is also provided to the policing engine 120. The policing engine 120 preferably also receives one or more policing IDs 124. The policing engine 120 preferably uses the disposition decision and the policing IDs to generate one or more policing recommendations 122. The policing recommendations may be a type of disposition recommendation, and may also be referred to as policing results. The policing recommendations preferably are provided to the application engine 106 to be used together with other disposition recommendations to generate application data, which may include the disposition decision.

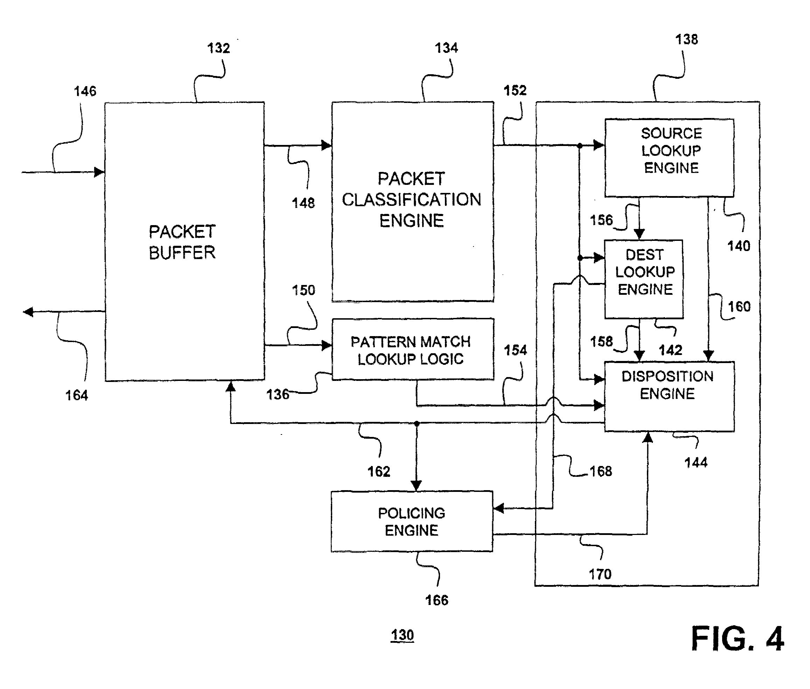

According to an alternative embodiment of the invention, the packet switching controller of 52 FIG. 2 includes a programmable disposition logic. FIG. 4 is a block diagram of a packet switching controller 130 with programmable disposition logic. The packet switching controller 130 may be similar, for example, to the packet switching controller 100 of FIG. 3. The packet switching controller includes a packet buffer 132, a packet classification engine 134, a pattern match lookup logic 136, an application engine 138 and a policing engine 166.

The application engine includes a source lookup engine 140, a destination lookup engine 142 and a disposition engine 144. The packet classification engine, the source lookup engine, the destination lookup engine and the disposition engine preferably are programmable with one or more application programs. In other words, each of the packet classification engine and the sub-engines of the application engine preferably includes a programmable microcode-driven embedded processing engine. In other embodiments, one or more of these engines may be implemented in hardware, i.e., as hardwired logic. The policing engine 166 may be implemented in hardwired logic or in programmable microcode-driven embedded processing engine.

The packet buffer 132 preferably receives and stores inbound packets 146. The packet buffer preferably provides the inbound packets or portions thereof 148 to the packet classification engine 134. The packet classification engine preferably classifies the packets using its application programs programmed thereon, and preferably provides a program identification 152 to the application engine 138. More particularly, the program identification 152 preferably is provided to the source lookup engine 140, the destination lookup engine 142 and the disposition engine 144 in the application engine. In one embodiment of the present invention, the packet classification engine 134 includes a decision tree-based classification logic.

The program identification 152 preferably is used to select application programs to be executed in each of the source lookup engine, the destination lookup engine and the disposition engine. The application programs to be executed in the source lookup engine, the destination lookup engine and the disposition engine preferably are selected based at least partly on packet classification information. The packet classification information may also be provided together with the program identification.

The packet buffer preferably also provides the inbound packets or portions thereof 150 to the pattern match lookup logic 136. The pattern match lookup logic preferably includes a predefined pattern against which the packets or the packet portions are compared. For example, the packet portions used for pattern matching may include, but are not limited to, portions of packet header data, packet payload data, or both the packet header data and the packet payload data. In other embodiments, the predefined pattern may reside in an external memory, which is accessed by the pattern match lookup logic for pattern matching. In still other embodiments, the match pattern may change during the operation of the packet switching controller.

After a comparison is made, a result 154 of the comparison preferably is provided to the application engine 138. More particularly, the result 154 of the comparison preferably is provided to the disposition engine 144 in the application engine. In some embodiments, the result may be provided to the disposition engine only when there is a match.

The source lookup engine 140 preferably generates a disposition recommendation 160 for an inbound packet at least partly by performing a source address lookup using a source address of the inbound packet. The disposition recommendation 160 preferably also depends on the application program executed in the source lookup engine 140 in accordance with the program identification provided by the packet classification engine. The disposition recommendation 160 preferably includes a security recommendation for the inbound packet.

In other embodiments, the source lookup engine 140 may be used to build one or more keys, which may then be used to look up the source address (e.g., IPSA) of the inbound packet in an address table. The keys may include, but are not limited to, one or more of Virtual LAN Identification (VLAN ID), application identification (APP ID) and IPSA. One or more keys built by the source lookup engine 140 may also be used to formulate a disposition recommendation, such as, for example, the security recommendation.

The destination lookup engine 142 preferably receives an output 156 from the source lookup engine 140. The output 156 may include the key used to look up the source address and/or the result of the lookup. The destination lookup engine preferably executes its application program identified by the packet classification engine 134 and generates one or more police identifiers (IDs) 168. The police IDs 168 may be based at least partly on destination address lookup using a destination address of the inbound packet.

The policing engine 166 preferably uses the police IDs 168 as keys to access policing data in a policing database. The policing engine 166 preferably uses the accessed policing data to generate one or more policing recommendations 170. The policing engine may also perform accounting functions. The policing recommendations preferably are used by the disposition engine along with other disposition recommendations to generate application data, which may include the disposition decision. When the pattern match lookup logic 136 finds a match, the pattern match result 154 preferably overrides the policing recommendations.

In other embodiments, the destination lookup engine 142 may be used to build one or more keys, which may then be used to look up the destination address (e.g., IPDA) of the inbound packet in an address table. The keys may include, but are not limited to, one or more of Virtual LAN Identification (VLAN ID), application identification (APP ID) and IPDA.

The disposition engine 144 preferably receives a number of disposition recommendations including, but not limited to, the security recommendation in the disposition recommendation 160, the policing recommendation 170, and the pattern match result 154. The disposition engine preferably generates a disposition decision 162 based on the disposition recommendations as well as the packet classification and/or program identification. The disposition decision 162 may include one of the disposition recommendations. In general, the pattern match result 154 may override the policing recommendation 170, and the policing recommendation may override the security recommendation in the disposition recommendation 160. The disposition decision 162 may be a part of application data, which may include, but is not limited to, one or more of accounting data, routing data and policing data.

The disposition decision preferably is provided to the packet buffer to be used for editing the inbound packets to be provided as outbound packets 164. The disposition decision preferably is also fed back to the policing engine for policing and accounting. For example, when the inbound packet is dropped, the policing engine should be made aware of that fact. In other embodiments, the destination lookup engine may include the policing engine. In such cases, the disposition decision preferably is provided to the destination lookup engine for policing and accounting.

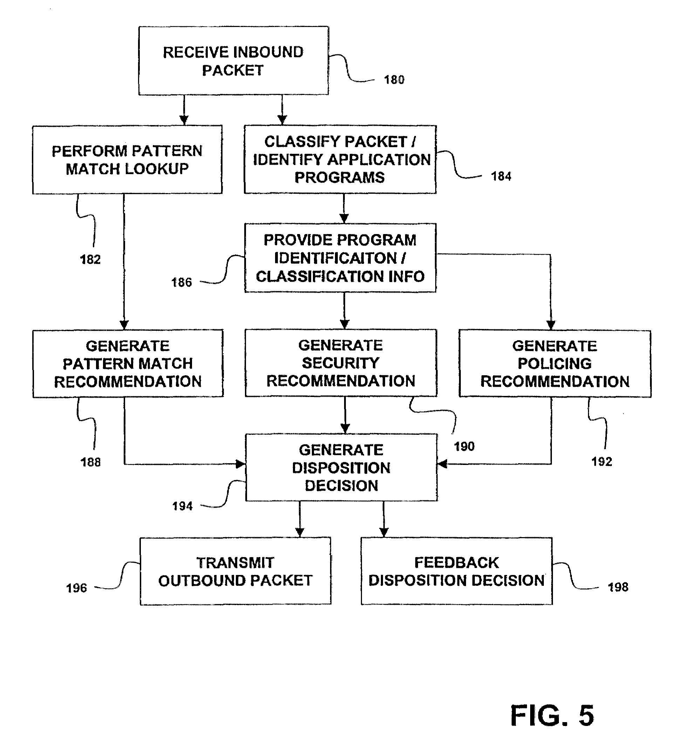

FIG. 5 is a flow diagram of a process of programmatically generating a disposition decision using multiple disposition recommendations and classification information. In step 180, a packet buffer, such as, for example, the packet buffer 132 of FIG. 4, preferably receives an inbound packet. In the packet buffer, packet header data may be extracted and stored in a header data cache.

The inbound packet or a portion of the inbound packet, which may include the header data, preferably is provided to a pattern match lookup logic, such as, for example, the pattern match lookup logic 136 of FIG. 4. In step 182, the pattern match lookup logic preferably performs a pattern match lookup between the inbound packet or the portion of the inbound packet and a predetermined pattern to generate a pattern match recommendation as indicated in step 188. The predetermined pattern, for example, may be contained in an internal or external memory. In other embodiments, the match pattern may change dynamically.

Meanwhile, the inbound packet or a portion thereof preferably is also provided to a packet classification engine, such as, for example, the packet classification engine 134 of FIG. 4. In step 184, the packet classification engine preferably classifies the packet and preferably identifies application programs based on the packet classification. In step 186, the program identification preferably is provided to a source lookup engine, a destination lookup engine and a disposition engine in an application engine, such as, for example, the application engine 138 of FIG. 4. The program identification preferably indicates application programs to be executed in these sub-engines. The packet classification information preferably is also provided to the source lookup engine, the destination lookup engine and the disposition engine. The source lookup engine preferably generates a security recommendation in step 190, while the policing engine preferably generates a policing recommendation in step 192 using police IDs from the destination lookup engine.

In step 194, the pattern match recommendation, the security recommendation and the policing recommendation preferably are provided to the disposition engine. The disposition engine preferably generates a disposition decision using one or more of the selected application program and the disposition recommendations. The disposition decision preferably is provided to the packet buffer to be used for editing and transmission of the inbound packet as an outbound packet in step 196. In step 198, the disposition decision preferably is also fed back to the policing engine for operations such as, for example, policing and accounting.

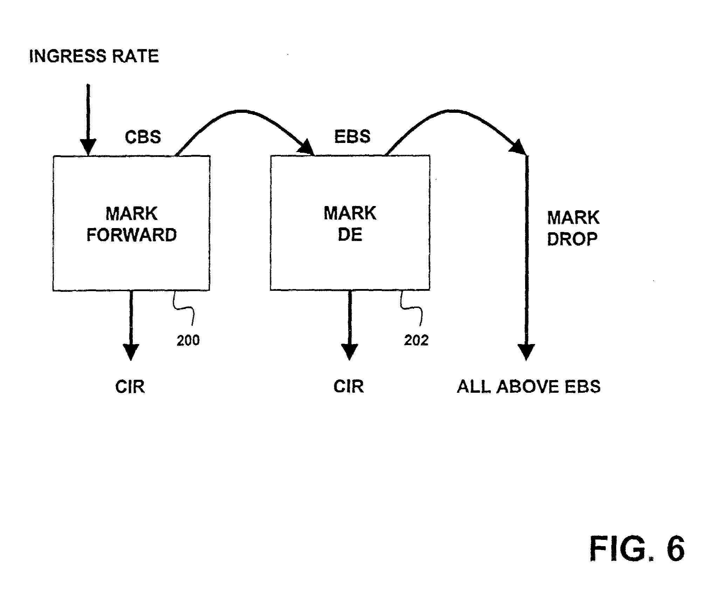

The policing engine 120, 166 provides bandwidth policing functions to preferably control the ingress data rate on a per-flow bases as part of a general solution to limit, e.g., police, and shape traffic flows. FIG. 6 is a block diagram illustrating the policing of different flows. The policing parameters preferably are established by defining a Committed Information Rate (CIR) in units of bytes per time along with a Committed Burst Size (CBS) and Excess Burst Size (EBS) both in units of bytes. The packets preferably are classified, i.e., marked, into a first bucket (Drop Eligible (DE) bucket) 200 and a second bucket (Drop bucket) 202.

As packets are presented at a given ingress rate, they are preferably marked according to a current balance within each bucket and its relationship to the CBS and EBS. The first bucket preferably maintains a Discard Eligible (DE) balance. The second bucket preferably maintains a Drop balance. If the ingress rate is less than the CBS, the packets preferably are marked as Forward. If the ingress rate is greater than or equal to the CBS but below the EBS, packets preferably are marked as DE. If the ingress rate is greater than or equal to the EBS, packets preferably are marked as Drop. Such a three-level dual token bucket policing scheme is described in further detail in Internet Engineering Task Force Request for Comment 2205 entitled "A Single Rate Three Color Marker," September, 1997, which is incorporated herein by reference.

Bandwidth policing is preferably established based on a bandwidth contract established between a service provider and a customer. In one embodiment of the present invention, the policing engine employs soft bandwidth policing where a packet does not necessarily receive the least favorable treatment indicated by any of the applicable bandwidth contracts. Instead, a packet may be admitted even if it violates a particular bandwidth contract as long as it complies with another bandwidth contract it has been classified to. In this regard, multiple bandwidth contracts are created for a customer to allow the policing of data packets based on multiple policeable groups, as is described in further detail in the above-referenced U.S. Patent Application Ser. No. 09/757,361. For instance, separate bandwidth contracts may be created for a switch, interface, port, and/or flow. Each bandwidth contract is preferably associated with a unique priority number or order. When an inbound packet is received, the policing engine selects the highest priority bandwidth contract and applies its policing data to determine if the inbound packet complies with the selected bandwidth contract. If the inbound packet is in compliance with the selected bandwidth contract, the packet is admitted. If the inbound packet is not in compliance with the selected bandwidth contract and it is the lowest priority bandwidth contract, the inbound packet is discarded. Otherwise, if the selected bandwidth contract is not the lowest priority bandwidth contract, the next highest priority bandwidth contract is examined to determine whether the packet may be admitted under it.

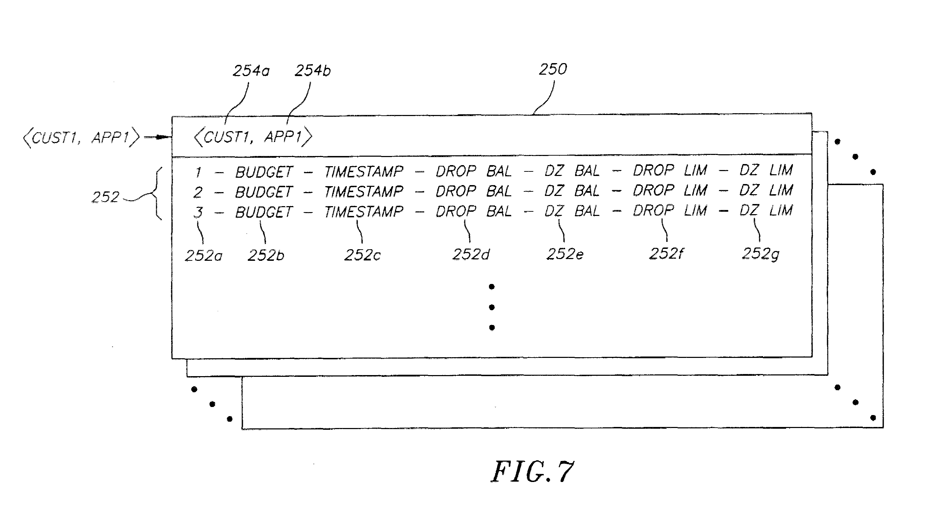

FIG. 7 is an illustration of exemplary policing data records 250 used for policing data packets based on soft bandwidth policing according to one embodiment of the invention. The policing data records 250 may be stored in the policing engine 120, 166. The policing data records 250 may also be collectively referred to as a policing database.

Each policing data record 250 is preferably headed and identified by a unique police ID/key 254 generated, for example, by the destination lookup engine 142. According to one embodiment of the invention, each police ID 254 is composed of a customer identifier 254a and/or an application identifier 254b. The customer identifier preferably identifies a particular customer based on a source address, physical port, or the like. The application identifier 254b preferably is an internal identifier assigned by an application RAM based on the type of application associated with the packet. Exemplary applications include web applications, Voice over IP (VoIP) applications, and the like.

In an alternative embodiment, the police ID 254 is composed of a source/destination address, both the source and destination addresses, the source/destination address and/or additional information, or any one parameter or combination thereof.

Each policing data record 250 further includes one or more policing data entries 252 for performing checks of the current rate of traffic flowing through a packet switching controller, such as, for example, the packet switching controller 130 of FIG. 4. Preferably, each policing data entry 252 depicts the current bandwidth as well as the bandwidth limits associated with a policeable group with a particular bandwidth contract.

According to the embodiment illustrated in FIG. 7, each policing data entry is associated with a priority number 252a indicative of the priority rankings of each policing data entry associated with a particular bandwidth contract. In an alternative embodiment, the order in which the policing data entries appear in the policing data record 250 indicate their priority rankings. A person skilled in the art should recognize, however, that any other designation or indicia may be used to prioritize the policing data entries associated with the various bandwidth contracts.

Each policing data entry includes a Drop balance 252d and a Drop Eligible (DE) balance 252e preferably maintaining track of traffic flowing through the packet switching controller. The Drop and DE balances 252d, 252e are preferably respectively compared against Drop and DE limits 252f, 252g for recommending that the current packet be forwarded, forwarded with a DE marking, or dropped immediately. The Drop limit 252f may also be referred to as the EBS, and the DE limit 252g as the CBS.

Each policing data entry 252 preferably further includes a timestamp 252c indicative of a time at which a last balance calculation was done. Given a current time and timestamp information, an elapsed time from the last balance calculation may be measured for calculating a rate of traffic during this time. The size of the timestamp increments may be adjusted based on a budget (CIR) 252b value also maintained in each policing data entry. For example, the budget value may be defined as bytes per timestamp increment according to one embodiment of the present invention.

In general terms, the policing engine retrieves the policing data entry with the highest priority ranking and performs a rate check by comparing the Drop/DE balance against the Drop/DE limit. If the rate check results in a drop recommendation, the policing engine retrieves the policing data entry with the next highest priority ranking, if such exists, and performs a second rate check. If, for example, the second rate check results in a forward recommendation, the forward recommendation is taken.

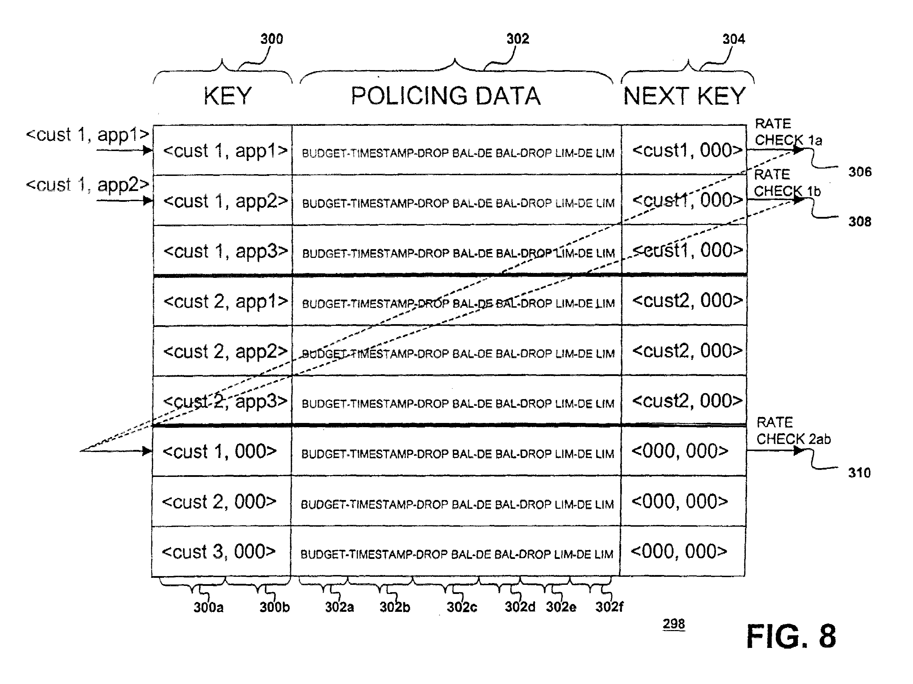

FIG. 8 is a policing data table 298 used for policing data packets based on soft bandwidth policing according to an alternative embodiment of the invention. The policing data table 298 may be stored in the policing engine 120, 166. The policing data table 298 may also be referred to as a policing database.

The policing data table 298 includes policing data for performing checks of the current rate of traffic flowing through a packet switching controller, such as, for example, the packet switching controller 130 of FIG. 4. The policing data table 298 may be arranged in a variety of ways, but preferably is configured as sequential entries, with each entry providing policing data 302 that is associated with a particular policy group.

Each policing data 302 preferably is identified by a unique police identifier (ID)/key 300. The police ID 300 preferably identifies different policy groups to which the packet may be classified. Preferably, each police ID 300 is composed of a customer identifier 300a and/or an application identifier 300b which may be similar to the customer identifier 254a and application identifier 254b of FIG. 7.

Each policing data may further be associated with a next police ID 304. The next police ID 304 preferably allows nested lookups in the policing database to identify additional policy groups and associated policing data applicable to the current packet. Preferably, the next police ID 304 identifies a policy group with a priority ranking below the policy group identified by a current key 300. The policing data 302 associated with the additional policy groups preferably are also retrieved for performing rate checks for the current packet.

Each policing data 302 preferably depicts the current bandwidth as well as the bandwidth limits of each policy group identified by the police ID 300. Each policing data 302 preferably includes a budget 302a, timestamp 302b, Drop balance 302c, DE balance 302d, Drop limit 302e, and DE limit 302f, which may be similar to the budget 253b, timestamp 252c, Drop balance 252dc, DE balance 252e, Drop limit 252f, and DE limit 252g of FIG. 7.

In the policing data table 298 illustrated in FIG. 8, the policing engine preferably performs a rate check 306 or 308 based on a first police ID to produce a first policy result indicating the recommended disposition of the packet. The policing engine preferably determines if the packet is to be admitted based on the first policy result. If it is, the packet is preferably admitted.

If, however, the first policy result indicates that the packet is to be dropped, the policing engine determines if the current policing data is associated with a valid next police ID 304. If it is, an assumption is preferably made that there exists at least one other bandwidth contract with a lower priority ranking that needs to be examined. The police engine examines the next police ID 304 and retrieves the policing data identified by the ID. A second rate check 310 is preferably then performed on the packet to produce a second policy result based on the second rate check, and a determination is made as to whether to admit the packet under it. Additional rate checks may continue to be performed based on values on the next policy ID field until an admit recommendation is made, or the policing data associated with the lowest priority bandwidth contract has been examined and the packet is dropped.

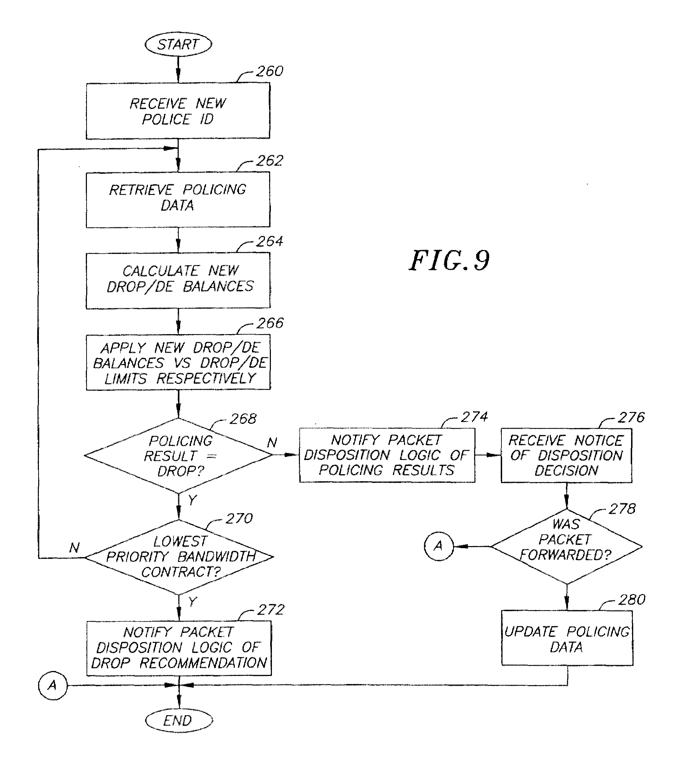

FIG. 9 is an exemplary flow diagram of a soft bandwidth policing process. The process starts, and in step 260, the policing engine preferably receives a new police ID for an incoming packet. In step 262 the policing engine retrieves policing data associated with the police ID. According to the embodiment illustrated in FIG. 7, the policing engine examines the priority numbers 252a associated with each policing data entry in the policing data record 250 and retrieves the policing data with the highest priority number. In the alternative embodiment illustrated in FIG. 8, the police ID received is preferably the police ID of the policing data associated with the highest priority bandwidth contract.

In step 264, the policing engine calculates a new Drop or DE balance, preferably according to the following formula:

$$\text{Balance}_{new} = \text{Balance}_{old} - [\text{budget} * (\text{time} - \text{timestamp})] + \text{packetsize}$$

In the formula, $\text{Balance}_{new}$ and $\text{Balance}_{old}$ preferably represent new and current balances, respectively, for either the Drop bucket or DE bucket associated with the police ID. Budget preferably represents budget 252a, e.g., CIR, associated with the police ID. The current Drop and DE balances correspond to the Drop balance 252c and DE balance 252d, respectively, associated with the police ID. Time and timestamp, respectively, preferably represent current time and timestamp 252b associated with the police ID. Packetsize preferably represents size of the packet being processed.

In step 266, the new Drop balance or DE balance is applied towards the Drop limit 252f or DE limit 252g. The balance preferably is applied towards the DE balance until the DE limit has been exceeded. The policing engine preferably compares the DE balance against the DE limit and preferably determines that the packet is to be forwarded if the DE balance is less than the DE limit. If the DE balance exceeds the DE limit, the balance preferably is applied towards the Drop balance. The policing engine preferably then compares the Drop balance against the Drop limit, and preferably determines that the packet is to be forwarded with a DE marking if the Drop balance is less than the Drop limit. However, if the Drop limit has been exceeded, the policing engine preferably determines that the packet is to be discarded immediately.

For example, in practice, the new balances preferably are calculated and then compared against the DE and Drop limits to determine forwarding status. The balances preferably are updated based on the forwarding result. For example, if the packet is marked Forward, the DE balance preferably is updated. In other words, when the packet is marked Forward, the DE bucket, such as, for example, the first bucket 200 of FIG. 6, preferably is filled. For further example, if the packet is marked DE, the Drop balance preferably is updated. In other words, when the packet is marked DE, the Drop bucket, such as, for example, the second bucket 202 of FIG. 6, is filled. At this point, the DE bucket is already full. For still further example, if the packet is marked Drop, neither the DE balance nor the Drop balance is updated since both buckets are full at this point.

In step 268, the policing engine determines whether the balance calculation produced a Drop policing result. If a Drop policing result was produced, a determination is made in step 270 as to whether the policing data that was used is associated with a lowest priority bandwidth contract. According to the embodiment illustrated in FIG. 7, the answer is YES if there are no other unexamined policing data entries in the policing data record 250. According to the alternative embodiment illustrated in FIG. 8, the answer is YES if the next police ID 304 field of the policing data table 298 is empty, invalid, or the like.

If the policing data that was used is associated with a lowest priority bandwidth contract, the policing engine in step 272 notifies the packet disposition logic such as, for example, the disposition engine 144 of FIG. 4, of the Drop policing result, which may also be referred to as a policing recommendation.

If the policing data that was used is not associated with a lowest priority bandwidth contract, the process returns to step 262 to retrieve policing data associated with the next highest priority ranking.

Referring again to step 268, if the policing engine did not produce a drop policing result, the policing result is either a forward or drop eligible recommendation, and other bandwidth contracts need not be examined. The policing engine may then notify the packet disposition logic of the policing results in step 274. The disposition engine preferably uses the police results and other disposition recommendations, e.g., security recommendation and pattern match result, to generate a disposition decision.

In step 276, the policing engine preferably receives notice from the disposition engine of the disposition decision. The disposition decision may include the decision on whether the packet was forwarded, forwarded with a DE marking, or dropped. In step 278 the policing engine preferably determines whether the packet was forwarded. If it was, each policing data associated with the forwarded packet is updated in step 280 to reflect an increased traffic.

The values updated in the policing database preferably include one or more of the DE balance, the Drop balance and the timestamp. The DE balance preferably is updated if it is less than the DE limit. The Drop balance preferably is updated if the DE balance is greater than the DE limit and the Drop balance is less than the Drop limit. If both balances are over their respective limits, then preferably neither is updated. In any case, it is desirable to not add the 'packetsize' (size of the packet) value to either balance if the packet, e.g., frame, is dropped for any reason as indicated by the disposition decision, for example. This way, an accurate count preferably is made of the packets coming into the switching fabric.

Although this invention has been described in certain specific embodiments, those skilled in the art will have no difficulty devising variations which in no way depart from the scope and spirit of the present invention. It is therefore to be understood that this invention may be practiced otherwise than is specifically described. Thus, the present embodiments of the invention should be considered in all respects as illustrative and not restrictive, the scope of the invention to be indicated by the appended claims and their equivalents rather than the foregoing description.

**Claims**

**1.** A rate policing method for a data communication switch, the method comprising the steps of:

> receiving a packet;
> determining if the packet is in compliance with a first bandwidth contract; and
> if the packet is not in compliance with the first bandwidth contract:

>> determining if the packet is in compliance with a second bandwidth contract; and
>> admitting the packet if the packet is in compliance with the second bandwidth contract.

**2.** The method of claim 1, wherein the ones of bandwidth contracts are associated with policing data including information on bandwidth constraints, the step of determining if the packet is in compliance with the first or second bandwidth contract further comprising the steps of:

> retrieving the policing data associated with the first or second bandwidth contract; and
> producing a policing result based on the policing data.

**3.** The method of claim 2, wherein the policing result indicates whether the packet is to be admitted.

**4.** The method of claim 2, wherein the policing result indicates whether the packet is to be discarded.

**5.** The method of claim 2 further comprising the step of updating the policing data if the packet is admitted.

**6.** The method of claim 1 further comprising the step of admitting the packet if the packet is in compliance with the first bandwidth contract.

**7.** The method of claim 1 further comprising the step of discarding the packet if the packet is not in compliance with the second bandwidth contract.

**8.** The method of claim 7, wherein the second bandwidth contract is a lowest priority bandwidth contract.

**9.** The method of claim 1, wherein the ones of the bandwidth contracts are applicable to a switch, interface, port, or flow.

**10.** The method of claim 1, wherein a first priority associated with the first bandwidth contract is higher than a second priority associated with the second bandwidth contract.

**11.** The method of claim 1 further comprising the steps of:

classifying the packet; and
identifying an application program based on the packet classification.

**12.** A rate policing method for a data communication switch comprising the steps of:

(A) receiving an inbound packet;
(B) determining if the inbound packet is in compliance with a current bandwidth contract;
(C) if the inbound packet is in compliance with the current bandwidth contract, admitting the packet;
(D) if the inbound packet is not in compliance with the current bandwidth contract and the current bandwidth contract is a lowest priority bandwidth contract, discarding the inbound packet; and
(E) if the packet is not admitted or discarded, repeating steps (B)-(E).

**13.** The method of claim 12, wherein the ones of bandwidth contracts are associated with policing data including information on bandwidth constraints, the step of determining if the inbound packet is in compliance with the current bandwidth contract further comprising the steps of:

retrieving the policing data associated with the current bandwidth contract; and
producing a policing result based on the policing data.

**14.** The method of claim 13, wherein the policing result indicates whether the packet is to be admitted.

**15.** The method of claim 13, wherein the policing result indicates whether the packet is to be discarded.

**16.** The method of claim 13 further comprising updating the policing data if the packet is admitted.

**17.** The method of claim 13, wherein the ones of the bandwidth contracts are applicable to a switch, interface, port, or flow.

**18.** A packet processing system comprising:

an input for receiving an inbound packet;
a packet processor coupled to the input, **characterized in that** the packet processor polices data packets received by the input based on ones of bandwidth contracts, the packet processor determining if the packet is in compliance with a first bandwidth contract, and if the packet is not in compliance with the first bandwidth contract, determining if the packet is in compliance with a second bandwidth contract, and admitting the packet if the packet is in compliance with the second bandwidth contract.

**19.** The system of claim 18, wherein the ones of bandwidth contracts are associated with policing data including information on bandwidth constraints, the packet processor retrieving the policing data associated with the first or second bandwidth contract and producing a policing result based on the policing data.

**20.** The system of claim 19, wherein the packet processor updates the policing data if the packet is admitted.

**21.** The system of claim 19, wherein the policing result indicates whether the packet is to be admitted.

**22.** The system of claim 18, wherein the packet processor admits the packet if the packet is in compliance with the first bandwidth contract.

**23.** The system of claim 18, wherein the packet processor discards the packet if the packet is not in compliance with the second bandwidth contract.

24. The system of claim 23, wherein the second bandwidth contract is a lowest priority bandwidth contract.

25. The system of claim 18, wherein the ones of the bandwidth contracts are applicable to a switch, interface, port, or flow.

26. The system of claim 18, wherein a first priority associated with the first bandwidth contract is higher than a second priority associated with the second bandwidth contract.

27. A packet processing system comprising:

> an input for receiving an inbound packet; and
> a policing engine coupled to the input, the policing engine including logic for:
>
> > (A) receiving the inbound packet;
> > (B) determining if the inbound packet is in compliance with a current bandwidth contract;
> > (C) if the inbound packet is in compliance with the current bandwidth contract, recommending that the packet be admitted;
> > (D) if the inbound packet is not in compliance with the current bandwidth contract and the current bandwidth contract is a lowest priority bandwidth contract, recommending that the inbound packet be discarded; and
> > (E) if the packet is not admitted or discarded, repeating steps (B)-(E).

28. The system of claim 27, wherein the ones of bandwidth contracts are associated with policing data including information on bandwidth constraints, the logic for determining if the packet is in compliance with the current bandwidth contract further comprising logic for:

> retrieving the policing data associated with the first or second bandwidth contract; and
> producing a policing result based on the policing data.

29. The system of claim 28, wherein the policing result indicates whether the packet is to be admitted.

30. The system of claim 28, wherein the policing result indicates whether the packet is to be discarded.

31. The system of claim 28, wherein the policing engine further includes logic for updating the policing data if the packet is admitted.

32. The system of claim 27, wherein the ones of the bandwidth contracts are applicable to a switch, interface, port, or flow.

33. The system of claim 27 further comprising a disposition engine receiving a packet disposition recommendation from the policing engine.

34. The system of claim 27 further comprising a packet classification engine including logic for classifying the packet and identifying an application program based on the packet classification.

35. A policing engine in a data communication switch, wherein the policing engine polices data packets flowing into the switch, the policing engine being configured to receive a packet and determine if the packet is in compliance with a first bandwidth contract, and if the packet is not in compliance with the first bandwidth contract, the policing engine being further configured to determine if the packet is in compliance with a second bandwidth contract and admit the packet if the packet is in compliance with the second bandwidth contract.

36. The policing engine of claim 35, wherein the ones of bandwidth contracts are associated with policing data including information on bandwidth constraints, the policing engine being further configured to retrieve the policing data associated with the first or second bandwidth contract and produce a policing result based on the policing data.

37. The policing engine of claim 36, wherein the policing engine is further configured to update the policing data if the packet is admitted.

38. The policing engine of claim 36, wherein the policing result indicates whether the packet is to be admitted.

**39.** The policing engine of claim 37 further configured to recommend that the packet be admitted if the packet is in compliance with the first bandwidth contract.

**40.** The policing engine of claim 37 further configured to recommend that the packet be discarded if the packet is not in compliance with the second bandwidth contract.

**41.** The policing engine of claim 40, wherein the second bandwidth contract is a lowest priority bandwidth contract.

**42.** The policing engine of claim 37, wherein the ones of the bandwidth contracts are applicable to ones of a switch, interface, port, or flow.

**43.** The policing engine of claim 37, wherein a first priority associated with the first bandwidth contract is higher than a second priority associated with the second bandwidth contract.

SWITCHING BACKPLANE

12

20      22      24

SWITCHING INTERFACE 14    26    SWITCHING INTERFACE 16    28    SWITCHING INTERFACE 18

LANs 30     LANs 32     LANs 34

FIG. 1

PACKET SWITCHING CONTROLLER 52

ACCESS CONTROLLER 54    50

FIG. 2

EP 1 241 843 A2

**FIG. 3**

102 104 106

108

PACKET
BUFFER

110

PACKET
CLASSIFICATION
ENGINE

112

APPLICATION
ENGINE

118

114 122

POLICING
ENGINE

124

120

116

100

FIG. 4

130

FIG. 5

EP 1 241 843 A2

INGRESS RATE

CBS

EBS

MARK
FORWARD

MARK
DE

MARK
DROP

200

202

CIR

CIR

ALL ABOVE EBS

FIG. 6

EP 1 241 843 A2

⟨CUST1, APP1⟩ ⟶  | 254a   254b                                    250
                  | ⟨CUST1, APP1⟩

252 ⟨  1 – BUDGET – TIMESTAMP – DROP BAL – DZ BAL – DROP LIM – DZ LIM
       2 – BUDGET – TIMESTAMP – DROP BAL – DZ BAL – DROP LIM – DZ LIM
       3 – BUDGET – TIMESTAMP – DROP BAL – DZ BAL – DROP LIM – DZ LIM

       252a   252b        252c          252d         252e         252f         252g

FIG.7

| | KEY (300) | POLICING DATA (302) | NEXT KEY (304) | |
|---|---|---|---|---|
| <cust 1, app1> → | <cust 1, app1> | BUDGET-TIMESTAMP-DROP BAL-DE BAL-DROP LIM-DE LIM | <cust1, 000> | RATE CHECK 1a |
| <cust 1, app2> → | <cust 1, app2> | BUDGET-TIMESTAMP-DROP BAL-DE BAL-DROP LIM-DE LIM | <cust1, 000> | RATE CHECK 1b  306 |
| | <cust 1, app3> | BUDGET-TIMESTAMP-DROP BAL-DE BAL-DROP LIM-DE LIM | <cust1, 000> | 308 |
| | <cust 2, app1> | BUDGET-TIMESTAMP-DROP BAL-DE BAL-DROP LIM-DE LIM | <cust2, 000> | |
| | <cust 2, app2> | BUDGET-TIMESTAMP-DROP BAL-DE BAL-DROP LIM-DE LIM | <cust2, 000> | |
| | <cust 2, app3> | BUDGET-TIMESTAMP-DROP BAL-DE BAL-DROP LIM-DE LIM | <cust2, 000> | |
| → | <cust 1, 000> | BUDGET-TIMESTAMP-DROP BAL-DE BAL-DROP LIM-DE LIM | <000, 000> | RATE CHECK 2ab → 310 |
| | <cust 2, 000> | BUDGET-TIMESTAMP-DROP BAL-DE BAL-DROP LIM-DE LIM | <000, 000> | |
| | <cust 3, 000> | BUDGET-TIMESTAMP-DROP BAL-DE BAL-DROP LIM-DE LIM | <000, 000> | |

300a 300b    302a 302b 302c 302d 302e 302f

298

FIG. 8

FIG.9

START

RECEIVE NEW
POLICE ID
— 260

RETRIEVE POLICING
DATA
— 262

CALCULATE NEW
DROP/DE BALANCES
— 264

APPLY NEW DROP/DE
BALANCES VS DROP/DE
LIMITS RESPECTIVELY
— 266

POLICING
RESULT =
DROP?
— 268

N → NOTIFY PACKET
DISPOSITION LOGIC OF
POLICING RESULTS
— 274

→ RECEIVE NOTICE
OF DISPOSITION
DECISION
— 276

WAS
PACKET
FORWARDED?
— 278

A

UPDATE POLICING
DATA
— 280

LOWEST
PRIORITY BANDWIDTH
CONTRACT?
— 270

N

Y

NOTIFY PACKET
DISPOSITION LOGIC OF
DROP RECOMMENDATION
— 272

A

END